# FASCICULE DE BREVET EUROPEEN

(11) **EP 0 434 825 B1**
(45) Date de publication et mention de la délivrance du brevet: **10.11.1993**
(21) Numéro de dépôt: 90911786.3
(22) Date de dépôt: 13.07.1990
(51) Int. Cl.: F16B 37/10

(54) **ECROU RAPIDE**
SCHNELL MONTIERBARE MUTTER
FAST NUT

(30) Priorité: 13.07.1989 FR 8909476
(43) Date de publication de la demande: 03.07.1991
(73) Titulaire: ARTEON, Marcel, F-92200 Neuilly-sur-Seine (FR)
(72) Inventeur: ARTEON, Marcel, F-92200 Neuilly-sur-Seine (FR)
(74) Mandataire: Viard, Jean
(86) Numéro de dépôt international: FR9000528
(87) Numéro de publication internationale: WO9100965

(56) Documents cités:
- FR-A- 1 382 310
- US-A- 2 118 361
- US-A- 2 257 327
- US-A- 3 603 552

## Description

La présente invention a pour objet un écrou pouvant être mis en position de serrage très aisément et très rapidement sur une tige filetée, afin d'assembler une pièce sur une autre, destiné en particulier, mais non exclusivement, à l'industrie du bâtiment.

La fixation de pièces par un ou des ensembles tige filetée-écrou est très fréquente. La tige filetée peut être constituée par une tige cylindrique portant un filetage sur tout ou partie de sa longueur ou constituée par une partie cylindrique filetée appartenant à une pièce plus complexe destinée à résister en traction. La tige elle-même ou sa partie cylindrique peut ne pas avoir une section entièrement circulaire, mais le cercle représentant en section l'enveloppe extérieure du filetage peut être tronqué par un ou plusieurs plats ou formes quelconques. Un tel type de tige sera désigné par la suite par la dénomination "tige-filetée".

Dans les assemblages par tige filetée et écrou, il est nécessaire de faire circuler l'écrou sur la tige filetée jusqu'au contact des pièces à assembler en faisant tourner l'écrou sur lui-même car les filets de la tige et de l'écrou sont en prise. Cette opération peut être longue et pénible, en particulier si l'accès à l'écrou est difficile. La présente invention a pour but de pallier cette difficulté et de proposer un écrou pouvant être amené rapidement en position de serrage. De tels écrous ont déjà été proposés.
Dans FR-A-1 382 310 est décrit un écrou à serrage rapide dans lequel deux pièces partiellement taraudées sont montées pivotantes à l'intérieur d'une bague coulissante de manière à ce que, dans une position, l'écrou puisse circuler librement sur une tige filetée alors que dans la seconde position des pièces les deux taraudages se ferment l'un sur l'autre de manière à venir en prise sur le filet de la tige. Ainsi, c'est la position de la bague que détermine l'état de l'écrou.

Dans US-A-3 603 552, un écrou, destiné au montage d'échafaudage, est constitué de deux parties articulées l'une sur l'autre de manière à ce que le taraudage interne puisse être désengagé du filet de la tige filetée sur laquelle il doit coulisser, au moyen de manettes.

US-A-2 257 327 décrit un écrou comprenant deux pièces pouvant pivoter l'une par rapport à l'autre pour définir une cavité interne dont une partie est taraudée et dont la seconde, conique, est lisse. Lorsque l'écrou est en position de serrage la partie taraudée est bloquée par une goupille conique. Mais le taraudage est du côté de la face d'appui. C'est à dire que le blocage par la goupille est nécessaire pour pouvoir serrer l'écrou.

Mais ces écrous ne permettent pas, sauf aux prix d'une augmentation prohibitive de leurs dimensions, de contrebalancer des efforts importants tels que ceux que l'on doit contenir dans le montage des coffrages de coulée du béton.

Selon la présente invention, l'écrou rapide comprenant deux pièces longitudinales identiques, articulées l'une sur l'autre et déterminant par assemblage un orifice central dont une première partie est taraudée et dont une seconde partie est lisse et sensiblement conique, l'axe d'articulation des deux pièces étant perpendiculaire à l'axe de l'orifice central, les taraudages étant décalés d'un demi pas est caractérisé en ce que l'embase de l'écrou est du même côté par rapport à l'axe que la partie lisse, chacune des pièces portant sur chacun de ses côtés un tourillon (4) sensiblement hémicylindrique, faisant saillie vers l'extérieur, pivotant, avec le tourillon de la pièce complémentaire, dans une bague maintenue en position par un clips.

Ainsi, les deux pièces constituant l'écrou peuvent pivoter autour d'une articulation extérieure disposée sensiblement au tiers de leur longueur pour prendre deux positions; une première position, ou position ouverte, dans laquelle les deux parties constituant le taraudage sont éloignées l'une de l'autre et une seconde position, ou position fermée, dans laquelle ces deux parties sont réunies pour venir en prise sur le filet de la tige filetée. Dans la position ouverte, l'écrou peut circuler librement sur la tige filetée, par exemple par glissement linéaire sans rotation pour atteindre la position de serrage, le contact avec la pièce à serrer provoquant automatiquement la fermeture de l'écrou. Le serrage de l'objet à fixer est alors obtenu par une rotation de quelques tours de l'écrou.

Selon une autre caractéristique de l'invention, l'articulation est réalisée par deux tourillons radiaux réunis par des bagues.

D'autres caractéristiques et avantages de l'invention apparaîtront au cours de la description qui va suivre d'un mode particulier de réalisation, donné uniquement à titre d'exemple non limitatif, en regard des dessins qui représentent :
- La figure 1, une vue en élévation d'une des deux parties d'un écrou selon l'invention ;
- La figure 2, une vue en bout de la Fig.1;
- La figure 3, une vue par-dessus d'un écrou constitué de deux pièces assemblées;
- La figure 4, une vue de l'écrou en position de déplacement linéaire sur une tige;
- La figure 5, une vue de l'écrou en position de serrage;
- Les figures 6 et 7, des vues respectivement de face et par-dessus d'un autre mode de réalisation.

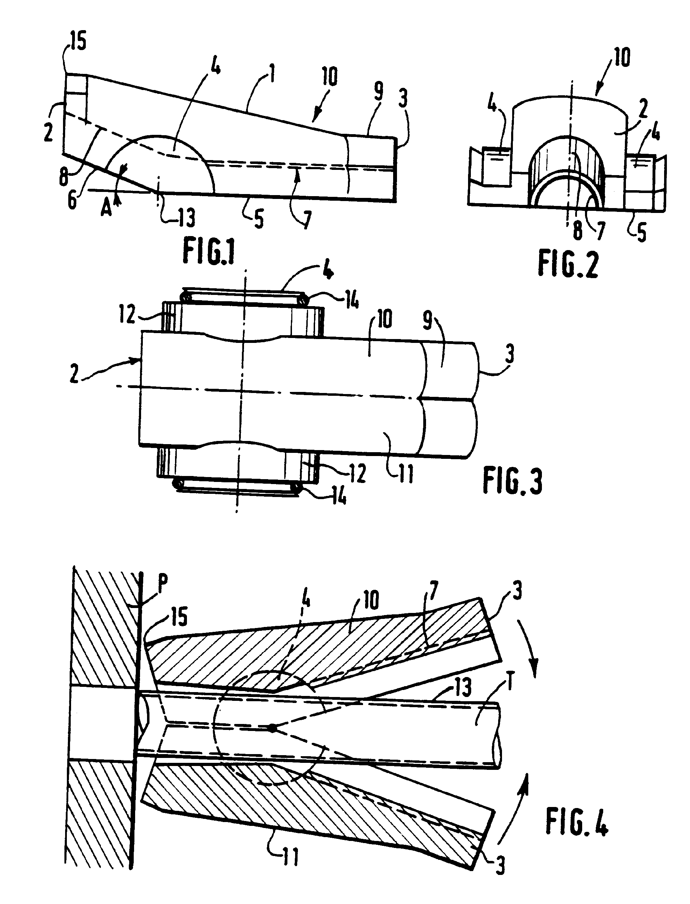

La figure 1, représente l'une des deux pièces 10 composant un écrou selon l'invention. Elle comprend un corps 1 sensiblement en forme de tronc de cône présentant une façe avant ou embase 2 et une face arrière ou tête 3. Sur les cotés du corps 1 et de part et d'autre de celui-ci sont prévus, dans un premier mode de réalisation, deux tourillons 4 destinés à assurer le pivotement des deux pièces 10 et 11 l'une par rapport à l'autre.

La pièce 10 présente, à sa partie inférieure, une face plane 5, se prolongeant par une seconde face plane 6 inclinée par rapport à la face 5, les deux faces formant un angle de 180° - A. Les deux pièces assemblées pour former un écrou pivotent l'une par rapport à l'autre autour d'un point d'articulation 13 pour passer de la position ouverte à la position fermée et vice-versa. Dans l'exemple représenté, le pivotement se fait selon un angle dont la valeur est de 2A. A cet effet, les tourillons 4 présentent la même découpe que le corps de chaque pièce. A l'intérieur du corps 1, et du côté de la tête est formé un taraudage 7 qui se prolonge, du côté de l'embase par une surface conique 8. A l'extérieur du corps 3, et au voisinage de la tête 3 est formé un relief 9 permettant le serrage de l'écrou par un moyen quelconque.Dans l'exemple représenté,le relief 9 constitue un "six-pans" pouvant être serré à l'aide d'une clé anglaise. Mais, le relief 9 peut affecter soit la forme d'un moletage, pour le serrage à la main ou être constitué de deux faces parallèles pour le serrage à l'aide d'une clé à fourche, soit encore être muni d'ailettes pour un blocage au marteau etc...

Dans l'exemple représenté, des bagues 12 sont montées sur les tourillons 4 et maintenues sur ceux-ci par des circlips 14. L'ensemble forme ainsi un écrou intégré. La Fig.3 montre, en vue par-dessus, les pièces 10 et 11 qui, avantageusement, sont des pièces identiques et symétriques par rapport à l'axe central de l'écrou qui, après montage sur une tige, se trouve confondu avec l'axe de la tige.

La figure 2, représente la pièce 10 vue en bout et on retrouve sur cette pièce la face avant 2, la partie conique 8 le taraudage 7 et les tourillons 4.

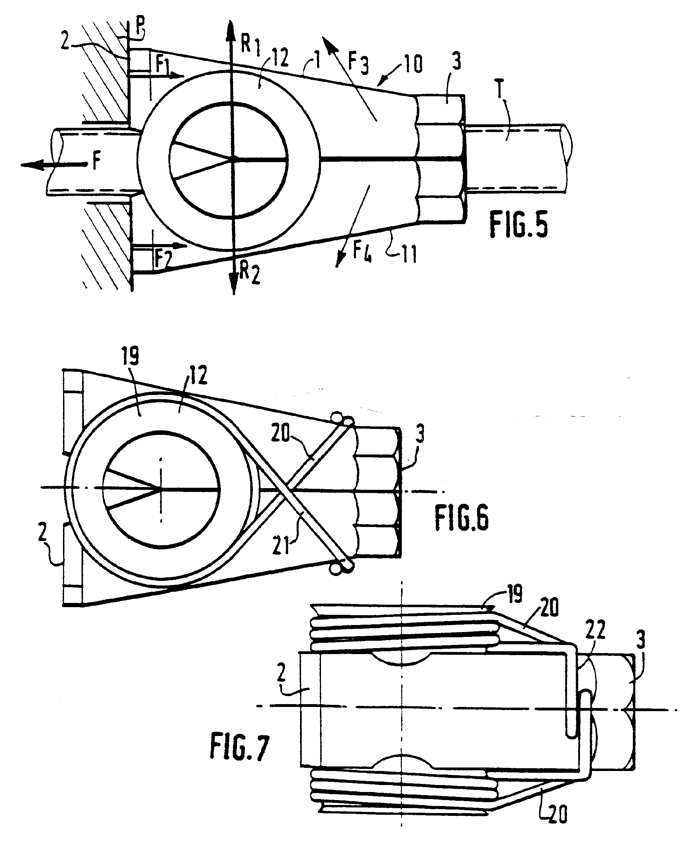

Sur la figure 4 est représenté en coupe un écrou selon l'invention en position ouverte en cours ou après coulissement ou translation sur une tige filetée T. L'écrou doit assembler la tige T et un objet ou ouvrage P. Comme cela apparaît sur la figure 4, la partie avant 15 de l'embase 2 qui se trouve en saillie du fait de l'ouverture de l'écrou, vient dans un premier temps au contact de l'ouvrage P. Ce contact provoque un basculement des deux pièces 10 et 11 autour de l'axe 13 qui referme l'écrou et la partie taraudée 7 autour de la tige T.

La forme conique de la surface 8 facilite le pivotement. Ainsi, les deux pièces pivotent chacune d'un angle A. Des formes conjuguées, (non représentées) du type tenon-mortaise, formées dans les faces 5 des pièces 10 et 11 peuvent assurer, si nécessaire, un positionnement transversal entre les deux pièces 10 et 11 vis à vis des efforts transversaux ou par rapport à l'axe de la tige filetée Ainsi, c'est la pression de contact avec l'ouvrage maintenu par la tige qui assure la tension nécessaire au blocage de l'écrou. Commme celà apparaît sur la figure 5, l'écrou est soumis, pendant son utilisation à des forces de réaction F1 et F2 de l'ouvrage P qui sont reprises par les forces s'exerçant sur la face active du taraudage qui est incliné de 60 à 45° comme représenté par les flèches F3 et F4 sur la Fig.5. Cette inclinaison tend à écarter les pièces 10 et 11 dans la région comprise entre le point d'articulation 13 et la tête 3. La résultante des forces F1 et F2 est reprise par les bagues 12 ( Flèches R1 et R2). Ainsi, c'est l'effort de traction sur la tige filetée T qui assure la fermeture de l'écrou, les bagues 12 étant dimensionnées de manière à résister à la résultante des forces F1 + F2.

Les deux pièces ou mâchoires peuvent également être assemblées sans avoir recours à des bagues de pivotement. Dans ce mode de réalisation (non représenté),sur chaque pièce, l'un des tourillons se prolonge par deux ailes parallèles dont la hauteur est égale à la circonférence externe d'un tourillon sensiblement hémicylindrique. Lors du montage de l'écrou, les ailes ou branches du "U" ainsi formé sont rabattues, par exemple au marteau, autour du tourillon correspondant de l'autre pièce. Ainsi, les bagues ne sont plus nécessaires et les pièces sont solidarisées latéralement, tout en pouvant pivoter l'une par rapport à l'autre.

Lorsque les efforts à soutenir sont relativement faibles, et notamment dans le cas d'écrous de petites dimensions, les deux bagues 12 peuvent avantageusement être remplacées par deux rivets ou boulons 16 tel que celui représenté sur la figure 6. En fait, dans le premier mode de réalisation, les tourillons pivotent à l'intérieur des bagues 12 mais celles-ci restent, en principe, fixes lors du pivotement. C'est à dire que les dites bagues 12 ne présentent pas nécessairement une forme extérieure circulaire.

Mais, dans le cas où la tige filetée est verticale, l'écrou tombe normalement sous son propre poids. Lorsque l'on desire obtenir que l'écrou soit fermé en permanence, c'est-à-dire que les deux parties taraudées restent, au repos, en contact l'une avec l'autre, il est possible d'utiliser le mode de réalisation représenté sur les figures 6 et 7. Dans ce mode de réalisation de pièces constituant l'écrou sont les même que dans l'exemple de réalisation donné en regard des figures 1 à 5. C'est à dire que les pièces 10 et 11 portent des tourillons 4 enserrés dans des bagues 12. Toutefois, le circlips 14 est remplacé dans ce cas par un ressort 19 en épingle à cheveux dont les extrêmités rectilignes 20 et 21 viennent prendre appui dans des encoches 22 formées dans la surface supérieure des pièces 10 et 11. Dans ces conditions, l'écrou est automatiquement fermé par l'action de force de rappel du ressort 19. Plus généralement, il est possible d'interposer, entre les deux pièces 10 et 11 des moyens de rappel élastique qui peuvent être par exemple des billes de matériau élastique tel que du néoprène, par exemple, qui éloignent les parties coniques l'une de l'autre, pour rapprocher les parties cylindriques, en l'absence de toute sollicitation extérieure. La force de rappel est aisément vaincue par pression de deux doigts sur la partie avant de l'écrou.

L'utilisation de l'écrou est extrêment simple. Pour faire circuler celui-ci le long d'une tige filetée il suffit d'appliquer dans la partie embase 2 une pression amenant les faces 6 des deux pièces 10 et 11 l'une contre l'autre ce qui dégage le taraudage de l'écrou des filets de la tige filetée. L'écrou peut ainsi circuler librement sur la tige et, lorsqu'il est arrivé a proximité de la pièce à serrer, la pression est relachée. Sous l'action du ressort 19, les deux pièces pivotent autour de leur l'axe de pivotement 13 et le taraudage est à nouveau refermé. Ainsi, même si la tige est verticale l'écrou ne tombe pas. D'autre part, le ressort 19 joue le role de clips empêchant les bagues 12 de s'échapper hors des tourillons.

## Revendications

1. Ecrou rapide, comprenant deux pièces longitudinales (10,11) identiques, articulées l'une sur l'autre et déterminant par assemblage un orifice central dont une première partie (7) est taraudée et dont une seconde partie (8) est lisse et sensiblement conique, l'axe d'articulation (13) des deux pièces (10,11) étant perpendiculaire à l'axe de l'orifice central, les taraudages étant décalés d'un demi pas,
caractérisé en ce que l'embase (2) de l'écrou est du même coté par rapport à l'axe (13) que la partie lisse (8), chacune des pièces (10,11) portant sur chacun de ses cotés un tourillon (4) sensiblement hémicylindrique, faisant saillie vers l'extérieur,pivotant, avec le tourillon de la pièce complémentaire dans une bague (12) maintenue en position par un clips (14).

2. Ecrou selon la revendication 1, caractérisé en ce des moyens de rappel élastique (19,20,21) en position de contact du taraudage (7) avec le filet de la vis sont montés sur les pièces (10,11).

3. Ecrou selon la revendication 1, caractérisé en ce que chaque pièce (10,11) comporte deux faces planes (5,6) formant entre elles un angle inférieur à 180°.

4. Ecrou selon la revendication 1, caractérisé en ce que l'un des tourillons de chaque pièce (10,11) présente des ailes pouvant être rabattues autour du tourillon (4) correspondant de chaque pièce.

## Patentansprüche

1. Schnell montierbare Mutter, die zwei identische Längsteile (10,11) aufweist, die miteinander gelenkig verbunden sind und durch das Zusammenfügen eine zentrale Öffnung definieren, von der ein erster Bereich (7) mit Innengewinde versehen ist und von der ein zweiter Bereich glatt und im wesentlichen konisch ist, die Drehachse (13) der beiden Teile (10, 11) senkrecht zur Achse der zentralen Öffnung ist und die Innengewinde um eine halbe Ganghöhe verschoben sind,
dadurch gekennzeichnet, daß die Sitzfiäche (2) der Mutter in bezug zur Achse (13) auf der gleichen Seite wie der glatte Bereich (8) liegt, jedes der Teile (10, 11) auf jeder seiner Seiten einen im wesentlichen halbzylindrischen Drehzapfen (4) trägt, der nach außen vorragt und mit dem Drehzapfen des ergänzenden Teils in einem Ring (12) drehbar durch einen Clip (14) in Position gehalten wird.

2. Mutter nach Anspruch 1, dadurch gekennzeichnet, daß elastische Rückholvorrichtungen (19, 20, 21) in der Position, in der das Innengewinde mit dem Gewinde der Schraube in Kontakt ist, auf den Teilen (10, 11) angebracht sind.

3. Mutter nach Anspruch 1, dadurch gekennzeichnet, daß jedes Teil (10, 11) zwei ebene Flächen (5, 6) aufweist, die zwischen sich einen Winkel bilden, der kleiner als 180° ist.

4. Mutter nach Anspruch 1, dadurch gekennzeichnet, daß einer der Drehzapfen jedes Teils (10, 11) Flügel aufweist, die um den entsprechenden Drehzapfen (4) jedes Teils gebogen werden können.

## Claims

1. A high-speed nut comprising two identical longitudinal pieces (10, 11) which are hinged to each other and which together define a central orifice having a first portion (7) which is tapped and having a second portion (8) which is smooth and substantially conical, the hinge axis (13) of the two pieces (10, 11) being perpendicular to the axis of the central orifice, the tappings being displaced by half a pitch step, the nut being characterized in that its base (2) is on the same side of the axis (13) as the smooth portion (8), each of the pieces (10, 11) carrying a substantially semicylindrical stub axle (4) on their sides, projecting outwards, and pivoting together with the stub axle of the complementary piece in a ring (12) held in position by a clip (14).

2. A nut according to any one of claims 1 to 3, characterized in that resilient return means (19, 20, 21) are mounted on the pieces (10, 11) to urge them towards the position in which the tapping (7) makes contact with the thread of the screw.

3. A nut according to any preceding claim, characterized in that each piece (10, 11) includes two plane faces (5, 6) forming an angle of less than 180° to each other.

4. A nut according to claim 1, characterized in that one of the stub axles from each of the pieces (10, 11) has wings capable of being folded down around the corresponding stub axle (4) of the other piece.
